# EUROPEAN PATENT APPLICATION

(11) **EP 4 052 564 A1**
(43) Date of publication of application: **07.09.2022**
(21) Application number: 21161063.9
(22) Date of filing: 05.03.2021
(51) Int. Cl.: A01G 3/037

(54) **CUTTING TOOL**

(71) Applicant: HUSQVARNA AB, 561 82 Huskvarna (SE)
(72) Inventor: Schwarzkopf, Michael, 89231 Neu-Ulm (DE)
(74) Representative: Finkele, Rolf

(57) **Abstract**

A cutting tool **(100)** includes a motor **(116)** operatively coupled with one or more cutting blades **(102), (104).** The cutting tool **(100)** also includes at least one sensor **(140)** including a magnet **(150)** and at least one hall sensor **(160), (170).** The cutting tool **(100)** further includes a control unit **(180)** configured with the at least one hall sensor **(160), (170)** and the motor **(116).** The cutting tool **(100)** is characterized in that the at least one sensor **(140)** includes a first hall sensor **(160)** to detect a first detected value **("V1")**, and a second hall sensor **(170)** to detect a second detected value **("V2").** At least one representation is derived from the first detected value **("V1")** and the second detected value **("V2").** The control unit **(180)** based on the at least one representation decides on a safe mode that allows starting of the motor **(116).**

## Description

### TECHNICAL FIELD

The present disclosure relates to a cutting tool. More specifically, the present disclosure relates to a gardening tool.

### BACKGROUND

Cutting tools such as secateurs are used for cutting, pruning, and shearing branches (say the small branches) in gardening application. Generally, the cutting tool uses an electromechanical switch for a cutting action. The electromechanical switch is activated by a hand force of a user. The cutting tool typically includes a sensor which enables the cutting tool to control a pedelec system based on a permanently measured sensor value. This arrangement provides a natural cutting behavior and supports the cutting action. Typically, the sensor includes one hall sensor and a permanent magnet which are positioned on same axis. The hall sensor and the permanent magnet move laterally to each other under the hand force of the user. However, in presence of an external magnet near the hall sensor, it is possible that the sensor detects this as a control signal. Further, this external magnet may lead to an unintended start or undesired behavior of the cutting tool.

Furthermore, a mechanical arrangement and a shielding arrangement to eliminate an external magnetic influence to avoid this undesired behavior of the cutting tool is costly. Moreover, these arrangements are difficult to manufacture and assemble. Also, these arrangements are bulky which is not good for the ergonomics of the cutting tool. Thus, there is need of the cutting tool with an improved hall sensor arrangement to avoid undesired behavior of the cutting tool in presence of external magnetic influence.

An example of a pruning assembly is provided in United State Patent 8,276,280 (hereinafter referred to as '280 reference). The '280 reference discloses the pruning assembly including an electric shear and a portable operating contact ring. The electric shear includes a fixed blade and a movable blade. The fixed blade and the movable blade perform a pruning operation by operating the movable blade by a driving force of a motor. The electric shear also includes a rotating magnet inserted into one side of the movable blade, and first and second hall sensors attached on a rear end of the fixed blade at a regular interval to detect a position of the rotating magnet. The first hall sensor detects a closed state of the movable blade and the second hall sensor detects an opened state of the movable blade, thus controlling a one-time reciprocating rotation of the movable blade. However, the arrangement of the movable magnet, first hall sensor, and second hall sensor are used only to detect open and close states of the movable blade. Further, this arrangement only prevents the reverse rotation of the motor but completely ignores the user's safety in presence of the external magnetic influence. Furthermore, the '280 reference does not disclose prevention of undesired behavior of the cutting tool in presence of the external magnetic influence using such arrangement. Moreover, the portable operating switch may create interference in an output of the hall sensor when the user intentionally or unintentionally positions the portable operating switch proximate the hall sensor. The external magnetic influence of the portable operating switch may lead to undesired behavior of the pruning assembly and may cause safety hazards.

### SUMMARY

In view of the above, it is an objective of the present disclosure to solve or at least reduce the drawbacks discussed above. The objective is at least partially achieved by a new design of a cutting tool. The cutting tool includes one or more cutting blades to perform a cutting action based on a hand force on the cutting tool. The cutting tool also includes a motor operatively coupled with the one or more cutting blades. The motor allows the cutting action by the one or more cutting blades. The cutting tool further includes at least one sensor measuring the hand force. The at least one sensor includes a magnet having a magnetic influence on at least one hall sensor. The hand force will move the magnet to produce one or more detected values from the at least one hall sensor. The cutting tool includes a control unit configured with the at least one hall sensor and the motor. The control unit receives at least one representation of the one or more detected values from the at least one hall sensor and drives the motor. The cutting tool is characterized in that the at least one sensor that measures the hand force is an arrangement of at least two hall sensors. The at least two hall sensors includes a first hall sensor to detect a first detected value, and a second hall sensor to detect a second detected value. The at least one representation is derived from the first detected value and the second detected value. The control unit based on the at least one representation decides on a safe mode that allows starting of the motor.

Thus, the present disclosure provides an improved design of the cutting tool with a pedelec system to assist a cutting action. The hall sensor arrangement of the cutting tool prevents any accidental and unintended start of the cutting tool in presence of an external magnetic influence. The output of the one hall sensor (say the first hall sensor) is used for control purpose while the output of the other hall sensor (say the second hall sensor) is used for validation and enabling of the control system. Further, the different arrangements of the sensor prevent manipulation in detected values by the hall sensors i.e., the first hall sensor, and the second hall sensor in the external magnetic influence when the external magnet is placed intended or unintended proximate the sensor. The first detected value and the second detected value are accurate and are influence by the external magnetic influence to signify presence of the external magnet. Moreover, a simple and cost-effective design of the cutting tool allows a user to perform cutting operations without any safety hazards.

According to an embodiment of the present disclosure, the first and/or the second hall sensor is a digital sensor, wherein a signal derived from the first, second detected values of that sensor is a digital value or comprises a communication protocol. The digital value or the communication protocol is used by the control unit to decide on the safe mode that allows starting of the motor.

According to an embodiment of the present disclosure, the control unit receives two representations, where one is derived from the first detected value and other derived from the second detected value, and then the two representations are compared with each other. The representations give an input to the control unit which represents the relative positioning of the first and second hall sensor with respect to the magnet. This input then used to decide on the safe mode that allows starting of the motor.

According to an embodiment of the present disclosure, the arrangement includes the first hall sensor, and the second hall sensor mounted on one side of a PCBA (Printed Circuit Board Assembly), and substantially laterally aligned with the magnet. The control unit compares the first detected value and the second detected value from the first hall sensor and the second hall sensor in this arrangement and decides on the safe mode when the first detected value is similar in magnitude to the second detected value. In this arrangement the first hall sensor and the second hall sensor are exposed substantially similarly to the magnetic influence of the magnet. Therefore, the first detected value and the second detected value both will be affected by different proportion in presence of external magnetic influence and hence undesired behavior (say unintended starting) of the cutting tool can be prevented.

According to an embodiment of the present disclosure, the arrangement includes the first hall sensor, and the second hall sensor which are mounted on opposite sides of the PCBA. Both the first hall sensor, and the second hall sensor have a positive or a negative sensitivity-based output value. The control unit compares the first detected value and the second detected value from the first hall sensor and the second hall sensor in this arrangement and decides on the safe mode when one of the first detected value, and the second detected value is within a pre-defined range of the magnetic influence of the magnet. In this arrangement the first hall sensor and the second hall sensor are exposed to an unequal magnetic influence of the magnet. Therefore, the first detected value and the second detected value both are so affected in presence of external magnetic influence such that one of them falls outside the pre-defined range of the magnetic influence, and hence undesired behavior of the cutting tool can be prevented.

According to an embodiment of the present disclosure, the arrangement includes the first hall sensor, and the second hall sensor which are mounted on opposite sides of the PCBA. Both the sensors have a different sensitivity-based output value. The control unit compares the first detected value and the second detected value from the first hall sensor and the second hall sensor in this arrangement and decides on the safe mode when one of the first detected value, and the second detected value is within a pre-defined range of the magnetic influence of the magnet. In this arrangement the first hall sensor and the second hall sensor are exposed to an unequal magnetic influence. Therefore, the first detected value and the second detected value both are so affected in presence of external magnetic influence such that one of them falls outside the pre-defined range of the magnetic influence, and hence undesired behavior of the cutting tool can be prevented.

According to an embodiment of the present disclosure, the arrangement includes the first hall sensor, and the second hall sensor are arranged in a staggered manner with respect to the magnet. The control unit compares the first detected value and the second detected value from the first hall sensor and the second hall sensor in this arrangement and decides on the safe mode when imbalance between the first detected value, and the second detected value is within a pre-defined range of the magnetic influence of the magnet. In this arrangement the first hall sensor and the second hall sensor are exposed to an unequal magnetic influence from the magnet. Therefore, the first detected value and the second detected value both are so affected in presence of external magnetic influence such that imbalance between them is outside the pre-defined range of the magnetic influence, and hence undesired behavior of the cutting tool can be prevented.

According to an embodiment of the present disclosure, the first hall sensor is substantially laterally/directly aligned to a central axis of the magnet, and the second hall sensor is not in direct alignment of the central axis of the magnet. In this arrangement the first detected value and the second detected value are different in magnitude. Further, the first detected value and the second detected value both are so affected in presence of external magnetic influence such that undesired behavior of the cutting tool can be prevented.

According to an embodiment of the present disclosure, the arrangement includes the first hall sensor, and the second hall sensor are arranged around opposite sides of the magnet. The control unit compares the first detected value and the second detected value from the first hall sensor and the second hall sensor in this arrangement and decides on the safe mode when one of the first detected value, and the second detected value is within a pre-defined range of the other. In this arrangement the first hall sensor and the second hall sensor are exposed to different magnetic influence. Therefore, the first detected value and the second detected value both are so affected in presence of external magnetic influence such that one of the first detected value, and the second detected value is outside a pre-defined range of the other, and hence undesired behavior of the cutting tool can be prevented.

According to an embodiment of the present disclosure, the first hall sensor, and the second hall sensor have different slope rates. The different slope rates allow different arrangement of the hall sensors to avoid undesired behavior of the cutting tool.

According to an embodiment of the present disclosure, the first hall sensor, and the second hall sensor have different slopes. The different slopes allow different arrangement of the hall sensors. The different slopes in different arrangement eliminate the safety hazards.

According to an embodiment of the present disclosure, the first hall sensor has a positive slope, and the second hall sensor has a negative slope. In this arrangement the first detected value and the second detected value are same in magnitude but opposite in polarity.

According to an embodiment of the present disclosure, the arrangement includes one of the first hall sensor, and the second hall sensor is a switch, and other delivers the one or more detected values to the control unit. The control unit detects the one or more detected value in this arrangement and decides on the safe mode to actuate the switch. The switch allows safe and reliance operation of the cutting tool, and also improves the robustness of the cutting tool.

According to an embodiment of the present disclosure, the switch is one or more of a bipolar, an omnipolar, and a latch. The different types of switches provides versatility in the arrangement and application of the cutting tool.

According to an embodiment of the present disclosure, the cutting tool is selected from the group of one or more of a secateur, a shear, and a lopper. The one or more of the secateur, the shear, and the lopper may be used for different (say gardening) applications.

Other features and aspects of this disclosure will be apparent from the following description and the accompanying drawings.

### BRIEF DESCRIPTION OF THE DRAWINGS

The disclosure will be described in more detail with reference to the enclosed drawings, wherein:
**FIG. 1** illustrates a sectional view of a cutting tool, according to an embodiment of the present disclosure;
**FIG. 2** illustrates a sectional view of a second handle of the cutting tool, according to an embodiment of the present disclosure;
**FIG. 3** illustrates a side view of an arrangement with a first sensor and a second sensor, according to a first embodiment of the present disclosure;
**FIG. 4** a graphical representation of a sensitivity of the first sensor and the second sensor, according to the first embodiment of the present disclosure;
**FIG. 5** illustrates a side view of an arrangement with a first sensor and a second sensor, according to a second embodiment of the present disclosure;
**FIG. 6** a graphical representation of the sensitivity of the first sensor and the second sensor, according to the second embodiment of the present disclosure;
**FIG. 7** illustrates a side view of an arrangement with a first sensor and a second sensor, according to a third embodiment of the present disclosure;
**FIG. 8** a graphical representation of the sensitivity of the first sensor and the second sensor, according to the third embodiment of the present disclosure;
**FIG. 9** illustrates a top view of an arrangement with a first sensor and a second sensor, according to a fourth embodiment of the present disclosure;
**FIG. 10** a graphical representation of the sensitivity of the first sensor and the second sensor, according to the fourth embodiment of the present disclosure;
**FIG. 11** illustrates a top view of an arrangement with a first sensor and a second sensor, according to a fifth embodiment of the present disclosure;
**FIG. 12** a graphical representation of the sensitivity of the first sensor and the second sensor for a first case, according to the fifth embodiment of the present disclosure;
**FIG. 13** a graphical representation of the sensitivity of the first sensor and the second sensor for a second case, according to the fifth embodiment of the present disclosure;
**FIG. 14** a graphical representation of the sensitivity of the first sensor and the second sensor for a third case, according to the fifth embodiment of the present disclosure;
**FIG. 15** illustrates a side view of an arrangement with a first sensor and a second sensor, according to a sixth embodiment of the present disclosure;
**FIG. 16** illustrates a graphical representation of the sensitivity of the first sensor and the second sensor for a first case, according to the sixth embodiment of the present disclosure;
**FIG. 17** illustrates a graphical representation of the sensitivity of the first sensor and the second for a second case, according to the sixth embodiment of the present disclosure; and
**FIG. 18** illustrates a side view of an arrangement with a first sensor and a second sensor, according to a seventh embodiment of the present disclosure.

### DESCRIPTION OF EMBODIMENTS

The present disclosure will be described more fully hereinafter with reference to the accompanying drawings, in which example embodiments of the disclosure incorporating one or more aspects of the present disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. For example, one or more aspects of the present disclosure may be utilized in other embodiments and even other types of structures and/or methods. In the drawings, like numbers refer to like elements.

Certain terminology is used herein for convenience only and is not to be taken as a limitation on the disclosure. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

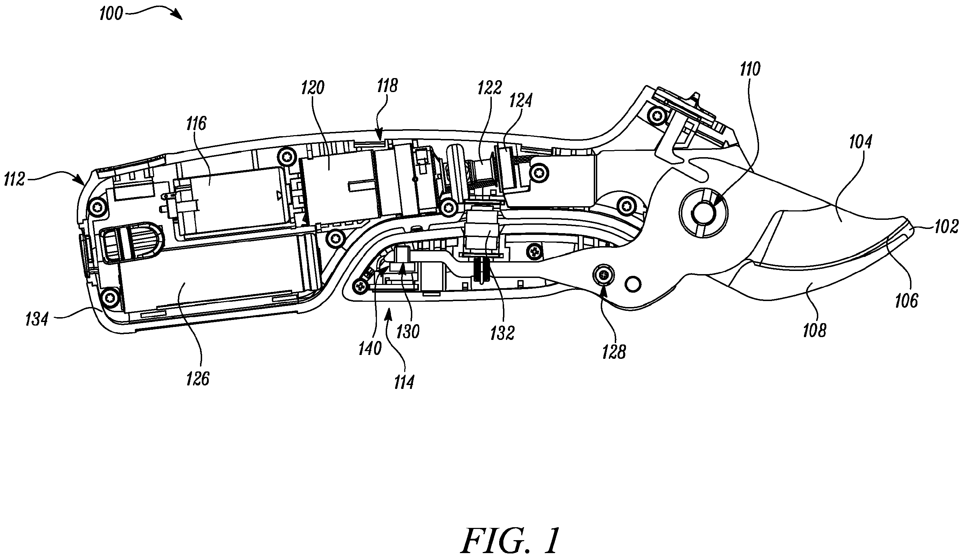

**FIG. 1** illustrates a cutting tool **100.** The cutting tool **100** of the present disclosure is illustrated as a gardening shear/tool having two blades. However, the present disclosure may be readily applied with any tool making application of an arrangement having a Hall sensor and one or more sensors. In some embodiments, the cutting tool **100** is selected from the group of one or more of a secateur, a shear, and a lopper. The cutting tool **100** may be used for variety of gardening applications such as trimming, shearing, pruning, and the like. The cutting tool **100** includes one or more cutting blades **102, 104** to perform a cutting action based on a hand force on the cutting tool **100.** The cutting blades **102, 104** includes a first cutting blade **102** and a second cutting blade **104.** The first cutting blade **102** includes a cutting edge **106.** The second cutting blade **104** includes an anvil support **108** for an object (say a branch, not shown) to be cut opposite to the cutting edge **106** of the first cutting blade **102.** Further, the cutting blades **102, 104** may include any combination, type, or arrangement of blades such as a bypass blade (not shown) for a cutting operation. The cutting blades **102, 104** together perform the cutting action on the object i.e., the branch placed therebetween. The first cutting blade **102** and second cutting blade **104** are coupled pivotally movable relative to each other at a pivot point **110.**

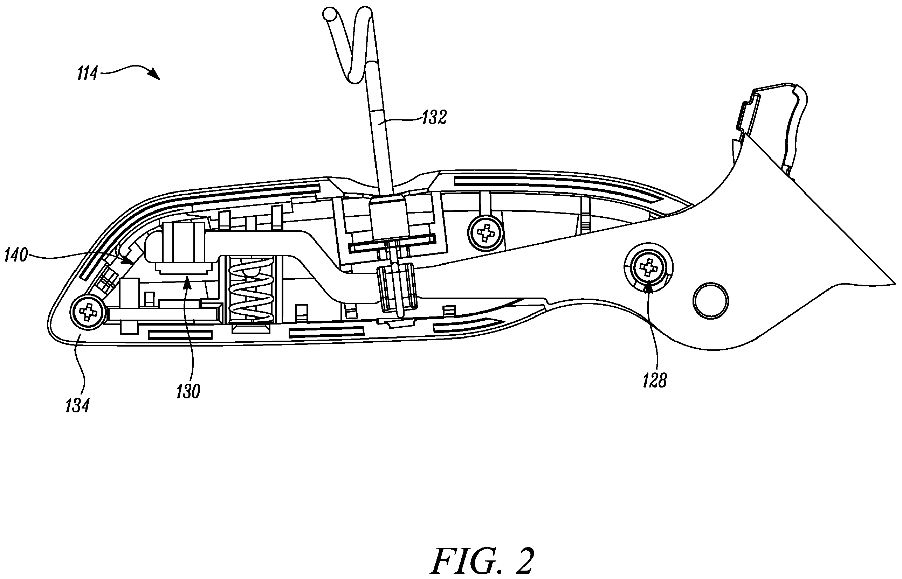

Referring to **FIGS. 1** and **2****,** the cutting tool **100** also includes a first handle **112** and a second handle **114.** The first cutting blade **102** and the second cutting blade **104** are operably coupled to the first handle **112** and the second handle **114,** respectively, such that the user can apply a manual force to the first handle **112** and second handle **114** in order to perform the cutting action.

As used herein, the "hand force" in accordance with the present disclosure may be any force applied by a user (say by hands of the user) on the cutting tool **100** to actuate the one or more cutting blades **102, 104.** Such hand force may be a starting or actuating force to trigger the cutting tool **100** to start a cutting action or a force substantial enough to perform complete cutting action. Further, the hand force may be applied by engagement with one or more of the first handle **112** and the second handle **114.**

The cutting tool **100** further includes a motor **116** operatively coupled with the one or more cutting blades **102, 104.** The motor **116** allows the cutting action by the one or more cutting blades **102, 104.** The cutting tool **100** includes a drive unit **118** that is operatively coupled to the motor **116.** The drive unit **118** includes a gear **120,** a winding element **122,** and a bearing **124.** Further, the cutting tool **100** also includes a battery **126** as a power source. The present disclosure may be readily applied with one or more batteries or any other power source as used or known in the art. The battery **126** supplies power to the motor **116,** and any component or part of the cutting tool **100.** The first handle **112** may pivot around a handle pivot point **128** such that an actuator **130** may be operated in response to a certain amount of the hand force applied to the first handle **112** (or the second handle **114**) causing the motor **116** to assist the cutting action with an assisting drive force. Further, to provide an automatic operating mechanism of the cutting tool **100,** a spring **132** is provided that is operatively coupled to the second handle **114.** The spring **132** may engage or disengage the actuator **130,** based on presence or absence of the hand force to the handles **112, 114.** Further, a housing **134** houses all the components such as the motor **116,** the gear **120,** the winding element **122,** and the bearing **124** of the cutting tool **100.** The present disclosure illustrates exemplary arrangement of the motor **116,** the gear **120,** the winding element **122,** the bearing **124,** among other components of the cutting tool **100,** however these components may be placed in any order, arrangement, place within the cutting tool **100.**

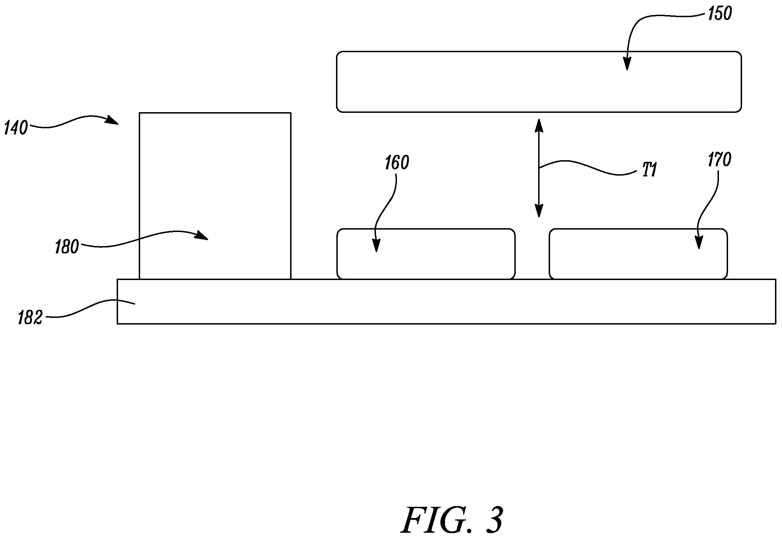

As shown in **FIG. 3****,** the cutting tool **100** further includes at least one sensor **140** measuring the hand force. The at least one sensor **140** includes a magnet **150** having a magnetic influence on at least one hall sensor **160, 170.** The magnetic influence in particular may be treated as a magnetic flux. The magnetic influence is detected by the at least one hall sensor **160, 170.** In some embodiments, the hall sensor **140** may include a position sensor to detect the position of the magnet **150.** The hall sensor **140** may be manufactured using a gallium arsenide (GaAs), an indium arsenide (InAs), an indium phosphide (InP), an indium antimonide (InSb), a graphene, and the like. The magnet **150** or the sensor **140** may be mounted on any one or both of the handles **112, 114** such that the magnet **150** and the hall sensor **140** move relative to each other. In the illustrated embodiment, the magnet **150** is mounted on one of the handles **112, 114.** The hand force will move the magnet **150** to produce one or more detected values **"V1", "V2"** from the at least one hall sensor **160, 170.** Further, the at least one sensor **140** that measures the hand force is an arrangement of at least two hall sensors **160, 170,** as illustrated in different embodiments hereinafter. The at least two hall sensors **160, 170** includes a first hall sensor **160** to detect a first detected value **"V1",** and a second hall sensor **170** to detect a second detected value **"V2".** Further, it is as well possible that the first and/or the second hall sensor **160, 170** is a digital sensor. In this case the signal derived from the first and/or second detected value **"V1", "V2"** of that sensor **160, 170** would be a digital value or comprises a communication protocol. In some embodiments the first and/or the second hall sensor **160, 170** may include an analog sensor or any signal as used or known in the relevant art.

Further, the position of the hall sensors **160, 170** need to be aligned with the magnet **150** and a travel path **"T1"** of the magnet **150.** In the present figure, the second hall sensor **170** is positioned proximate the first hall sensor **160** for reliability and better sensor output. In this arrangement, the first hall sensor **160** and the second hall sensor **170** detect the first detected value **"V1"** and the second detected value **"V2".** Further, the first hall sensor **160** and the second hall sensor **170** are exposed to the magnetic influence which may vary depending upon the arrangement of the sensor **140.** The first hall sensor **160** and the second hall sensor **170** may define same sensitivities. Further, the first hall sensor **160,** and the second hall sensor **170** have same or similar slope rates. In some embodiments, the first hall sensor **160** and the second hall sensor **170** may also define inverse sensitivities. Further, the first hall sensor **160,** and the second hall sensor **170** have different slope rates.

It is obvious to the one skilled in the art that with all examples of the various embodiments discussed in this specification the polarity of the first hall sensor **160** and the second hall sensor **170** are only exemplary and a person skilled in the art would arrive at the same result when using the first hall sensor **160** and/or second hall sensor **170** of inverse polarities. For instance, different arrangements/embodiments of the present disclosure may be readily implemented using the first hall sensor **160** and second hall sensor **170** of same polarities with 180 degree inverse mounting or mounting the first hall sensor **160** and second hall sensor **170** in different arrangements, sensitivities, and like.

The cutting tool **100** includes a control unit **180** configured with the at least one hall sensor **160, 170** and the motor **116** (shown in **FIG. 1**). The control unit **180** receives the at least one representation of the one or more detected values "**V1**", **"V2"** from the at least one hall sensor **160, 170,** and drives the motor **116.** Further, the control unit **180** may compare, analyze, and store a number of input signals from the first hall sensor **160,** the second hall sensor **170,** the motor **116,** and the like. Further, the control unit **180** receives two representations, where one is derived from the first detected value **"V1"** and other derived from the second detected value **"V2".** The two representations are compared with each other. The at least one representation is derived from the first detected value **"V1"** and the second detected value **"V2".** The control unit **180** may include a memory device (not shown) to store data from various components of the cutting tool **100.** Moreover, the control unit **180** receives the first detected value **"V1"** and the second detected value **"V2"** and compares their combination. The control unit **180** based on the at least one representation decides on a safe mode that allows starting of the motor **116.** The control unit **180** of the present disclosure may take input from one or more of the first detected value **"V1"** and the second detected value **"V2"** in any order, arrangement, sequence, or combination thereof. In some embodiments, the at least one representation from the one or more of the first detected value **"V1"** and the second detected value **"V2"** may be preferably provided to the control unit **180** from efficiency, implementation, and other considerations. The safe mode of starting of the motor **116** is a condition when the first hall sensor **160** and the second hall sensor **170** is not affected by an external magnetic influence. In the safe mode the first detected value **"V1"** and the second detected value **"V2"** are not affected by any external magnetic influence and thereby indicate absence of any external magnet. Further, in presence of the external magnetic influence, the first detected value **"V1"** and the second detected value **"V2"** are affected by some proportion then the control unit **180** may not allow the safe mode of starting the motor **116,** hence the motor **116** remains unoperated. Thus, a condition when the first detected value **"V1"** and the second detected value **"V2"** are not in a pre-defined range of values, the control unit **180** may not allow the starting of the motor **116.**

**FIG. 3** illustrates a first embodiment of the sensor **140.** In this embodiment, the arrangement includes the first hall sensor **160,** and the second hall sensor **170** mounted on one side of a PCBA (Printed Circuit Board Assembly) **182,** and substantially laterally aligned with the magnet **150.** In some other embodiment, the first hall sensor **160,** and the second hall sensor **170** may be mounted on another side of the PCBA **182.** The first hall sensor **160** and the second hall sensor **170** may include a positive sensitivity or negative sensitivity. In this arrangement, the sensitivities of the first hall sensor **160** and the second hall sensor **170** are same. In this arrangement, the first hall sensor **160** and the second hall sensor **170** measure the same values i.e., the first detected value **"V1"** and the second detected value **"V2"** are same or similar in magnitude and polarity. Further, the control unit **180** compares the first detected value **"V1"** with the second detected value **"V2".** Furthermore, if the first detected value **"V1"** and the second detected value **"V2"** are in a pre-defined range of the magnetic influence of the magnet **150,** then the control unit **180** decides on a safe mode that allows starting of the motor **116.** Moreover, if the first detected value **"V1"** and the second detected value **"V2"** are not in the pre-defined range of the magnetic influence of the magnet **150,** then the control unit **180** prevents starting of the motor **116.**

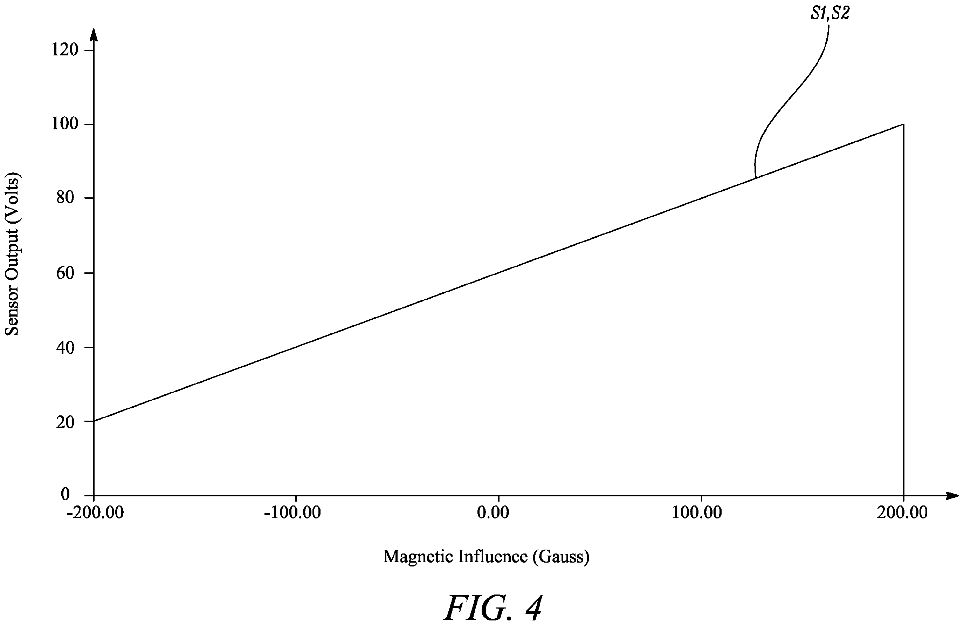

**FIG. 4** illustrates the sensitivity slopes of the first hall sensor **160** and the second hall sensor **170** in the first embodiment. The first hall sensor **160** defines a first slope **"S1"** and the second hall sensor **170** defines a second slope **"S2"** respectively. The first slope **"S1"** and the second slope **"S2"** give the first detected value **"V1"** (Volts) and second detected value **"V2"** (Volts) under the magnetic influence (Gauss) of the magnet **150.** In the illustrated embodiment, the first hall sensor **160** and the second hall sensor **170** include a positive sensitivity. In some other embodiments, the first hall sensor **160** and the second hall sensor **170** may include a negative sensitivity. Further, the first slope **"S1"** and the second slope **"S2"** are identical hence both the first slope **"S1"** and the second slope **"S2"** overlap, though may not fully overlap in some embodiments.

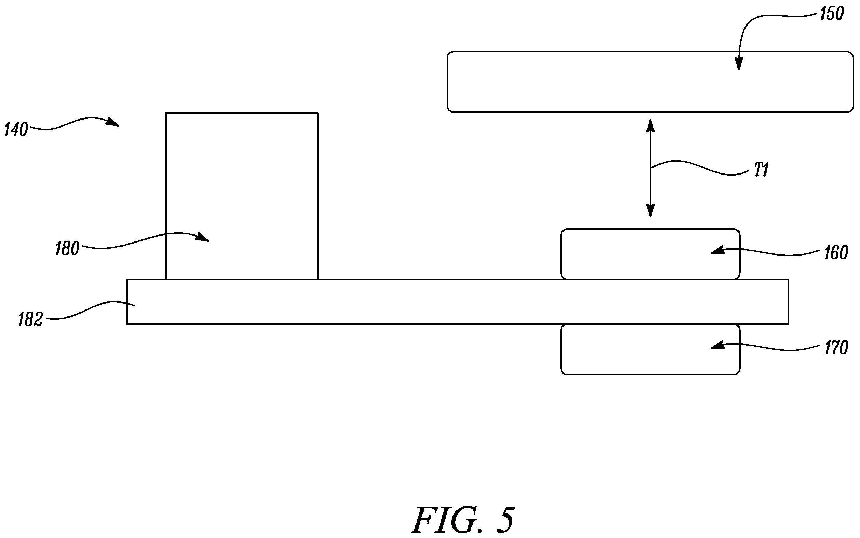

**FIG. 5** illustrates a second embodiment of the sensor **140.** In this embodiment, the arrangement includes the first hall sensor **160,** and the second hall sensor **170** mounted on opposite sides of the PCBA **182.** The first hall sensor **160** and the second hall sensor **170** may include a positive sensitivity or negative sensitivity. In this arrangement, both the sensors **160, 170** have a positive or a negative sensitivity-based output value. In this arrangement, the first detected value **"V1"** and the second detected value **"V2"** are same in polarity but different in magnitude. Further, the control unit **180** compares the first detected value **"V1"** and the second detected value **"V2"** from the first hall sensor **160** and the second hall sensor **170** in this arrangement and decides on the safe mode when one of the first detected value **"V1",** and the second detected value **"V2"** is within a pre-defined range of the magnetic influence of the magnet **150.**

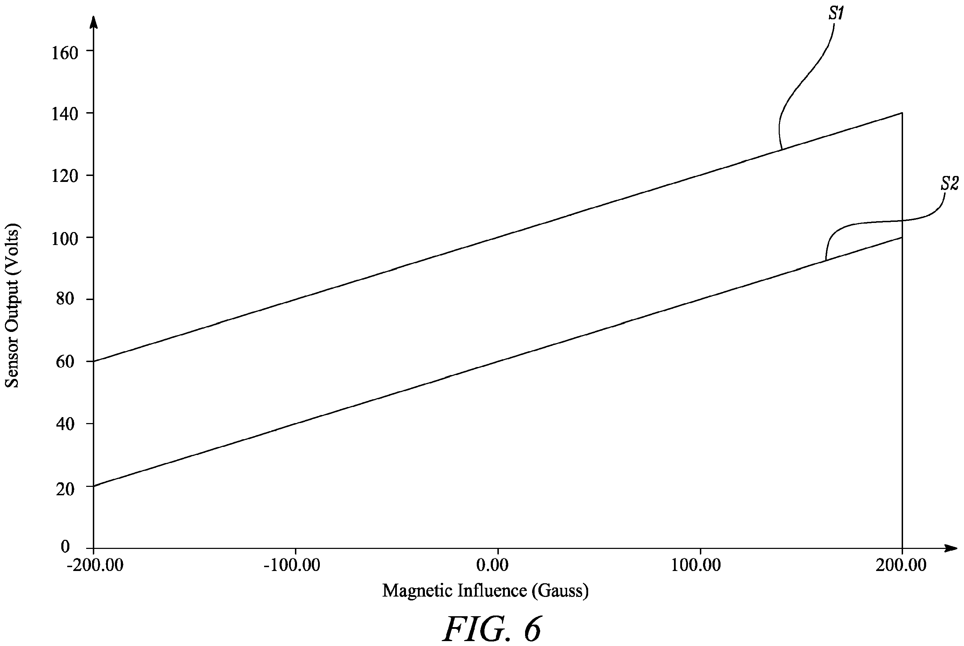

**FIG. 6** illustrates the sensitivity slopes of the first hall sensor **160** and the second hall sensor **170** in the second embodiment. The first hall sensor **160** defines a first slope **"S1"** and the second hall sensor **170** defines a second slope **"S2".** The first slope **"S1"** and the second slope **"S2"** give the first detected value **"V1"** (Volts) and second detected value **"V2"** (Volts) under the magnetic influence (Gauss) of the magnet **150.** In the illustrated embodiment, the first hall sensor **160** and the second hall sensor **170** include a positive sensitivity. In some other embodiments, the first hall sensor **160** and the second hall sensor **170** may include a negative sensitivity. Further, the first slope **"S1"** and the second slope **"S2"** are identical but do not overlap as the first hall sensor **160** is positioned near the magnet **150** as compared to the second hall sensor **170.**

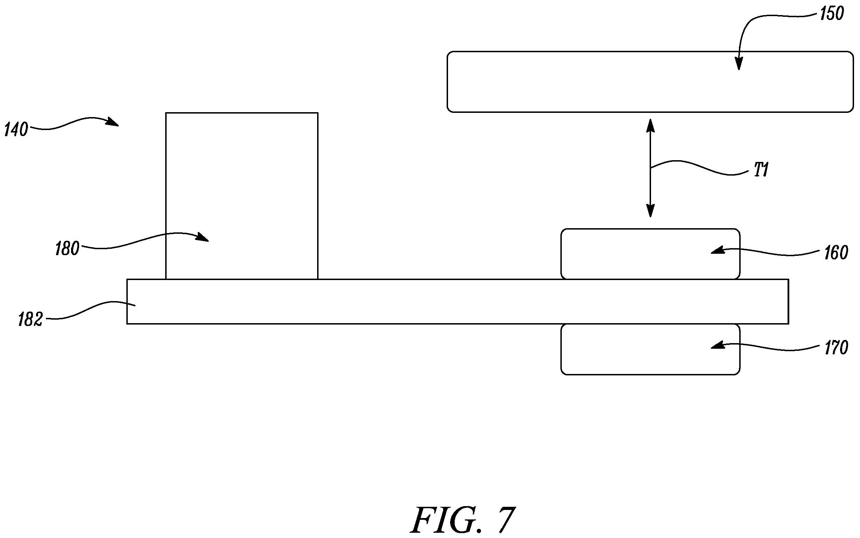

**FIG. 7** illustrates a third embodiment of the sensor **140.** In this embodiment, the arrangement includes the first hall sensor **160,** and the second hall sensor **170** mounted on opposite sides of the PCBA **182.** In this arrangement, both the sensors **160, 170** have a different sensitivity-based output value. In this arrangement, the first detected value **"V1"** and the second detected value **"V2"** are different in polarity and magnitude. Further, the control unit **180** compares the first detected value **"V1"** and the second detected value **"V2"** from the first hall sensor **160** and the second hall sensor **170** in this arrangement and decides on the safe mode when one of the first detected value **"V1",** and the second detected value **"V2"** is within a pre-defined range of the magnetic influence of the magnet **150.**

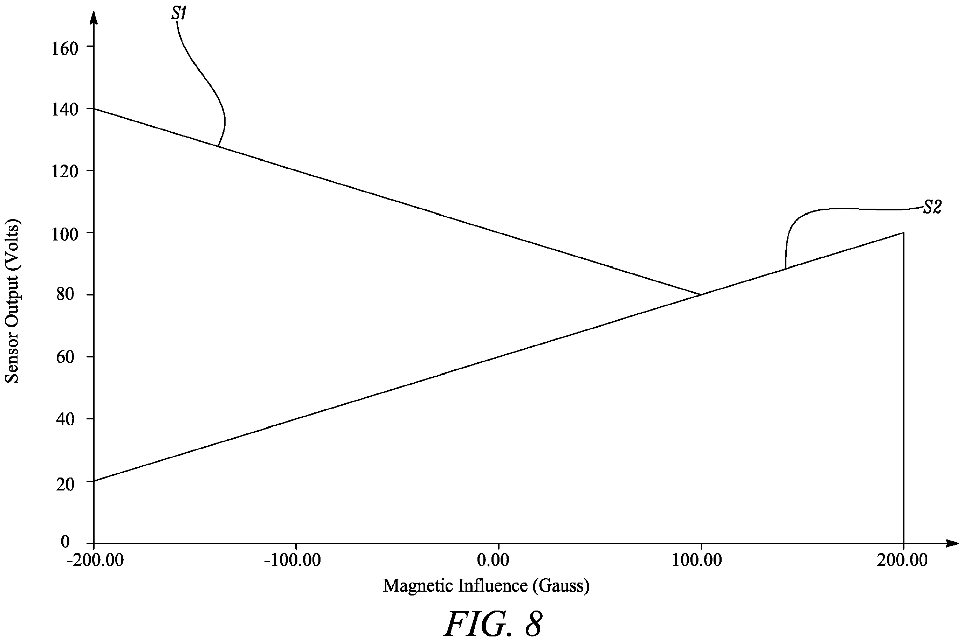

**FIG. 8** illustrates the sensitivity slopes of the first hall sensor **160** and the second hall sensor **170** in the third embodiment. The first hall sensor **160** defines a first slope **"S1"** and the second hall sensor **170** defines a second slope **"S2".** The first slope **"S1"** and the second slope **"S2"** give the first detected value **"V1"** (Volts) and second detected value **"V2"** (Volts) under the magnetic influence (Gauss) of the magnet **150.** In the illustrated embodiment, the first hall sensor **160** includes a negative sensitivity and the second hall sensor **170** include a positive sensitivity. In some other embodiments, the first hall sensor **160** may include positive sensitivity and the second hall sensor **170** may include the negative sensitivity. Further, the first slope **"S1"** and the second slope **"S2"** are non-identical as the first hall sensor **160** is positioned near the magnet **150** as compared to the second hall sensor **170.** Furthermore, the first slope **"S1"** is inverse as compared to the second slope **"S2".**

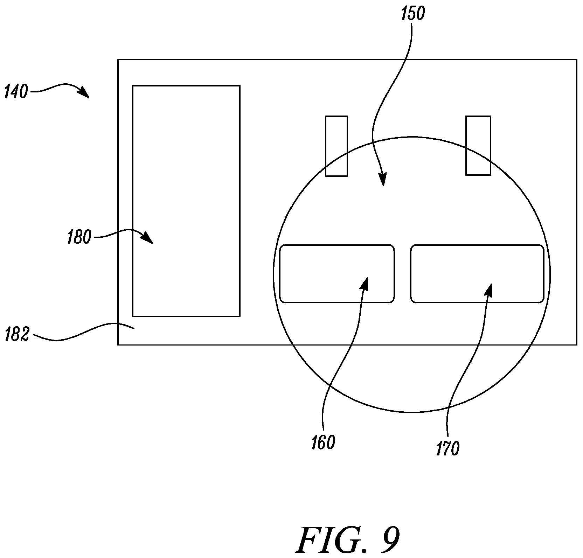

**FIG. 9** illustrates a fourth embodiment of the sensor **140.** In this embodiment, the arrangement includes the first hall sensor **160,** and the second hall sensor **170** mounted on same side of the PCBA **182.** The first hall sensor **160** includes a negative sensitivity and the second hall sensor **170** includes a positive sensitivity. In some other embodiment, the first hall sensor **160** includes a positive sensitivity and the second hall sensor **170** includes a negative sensitivity. In this arrangement, both the sensors **160, 170** have a different sensitivity-based output value. In this arrangement, the first detected value **"V1"** and the second detected value **"V2"** are different in polarity but same in magnitude. Further, the control unit **180** compares the first detected value **"V1"** and the second detected value **"V2"** from the first hall sensor **160** and the second hall sensor **170** in this arrangement and decides on the safe mode when one of the first detected value **"V1",** and the second detected value **"V2"** is within a pre-defined range of the magnetic influence of the magnet **150.**

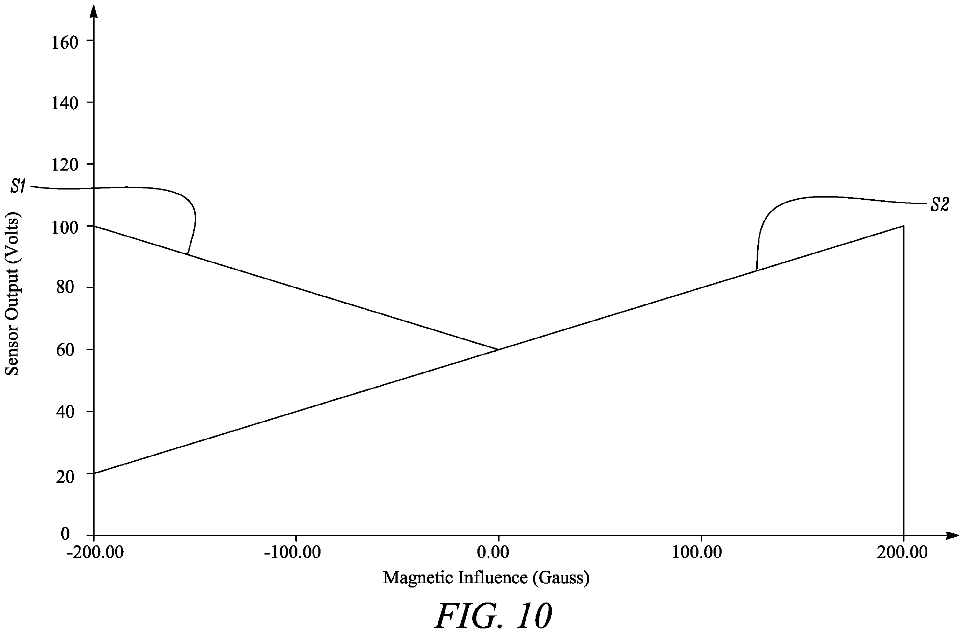

**FIG. 10** illustrates the sensitivity slopes of the first hall sensor **160** and the second hall sensor **170** in the fourth embodiment. The first hall sensor **160** defines a first slope **"S1"** and the second hall sensor **170** defines a second slope **"S2".** The first slope **"S1"** and the second slope **"S2"** give the first detected value **"V1"** (Volts) and second detected value **"V2"** (Volts) under the magnetic influence (Gauss) of the magnet **150.** In the illustrated embodiment, the first hall sensor **160** includes a negative sensitivity and the second hall sensor **170** include a positive sensitivity. Further, first slope **"S1"** and the second slope **"S2"** are inversely identical and do not overlap as the first hall sensor **160** has the negative sensitivity and the second hall sensor **170** has the positive sensitivity. Furthermore, the first slope **"S1"** is inverse as compared to the second slope **"S2".**

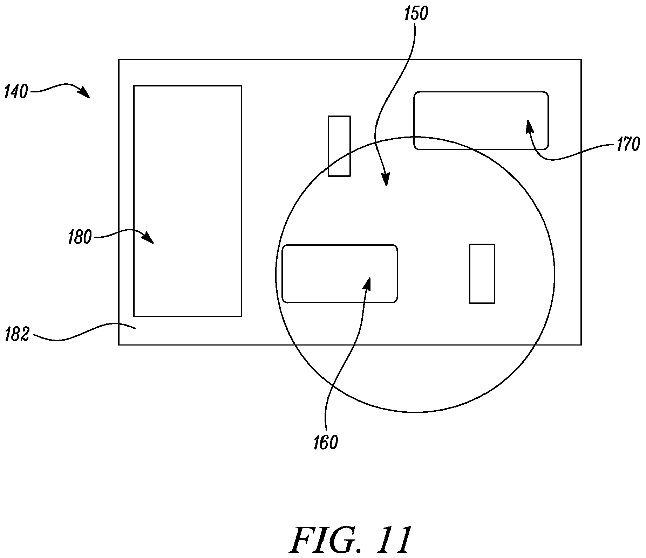

**FIG. 11** illustrates a fifth embodiment of the sensor **140.** In this embodiment, the arrangement includes the first hall sensor **160,** and the second hall sensor **170** arranged in a staggered manner with respect to the magnet **150.** In a first case, the first hall sensor **160,** and the second hall sensor **170** include same sensitivity. In a second case, the first hall sensor **160,** and the second hall sensor **170** include different sensitivity. In third case the first hall sensor **160** and the second hall sensor **170** include inverse sensitivity. Further, the control unit **180** compares the first detected value **"V1"** and the second detected value **"V2"** from the first hall sensor **160** and the second hall sensor **170** in this arrangement and decides on the safe mode when imbalance between the first detected value **"V1",** and the second detected value **"V2"** is within a pre-defined range of the magnetic influence of the magnet **150.**

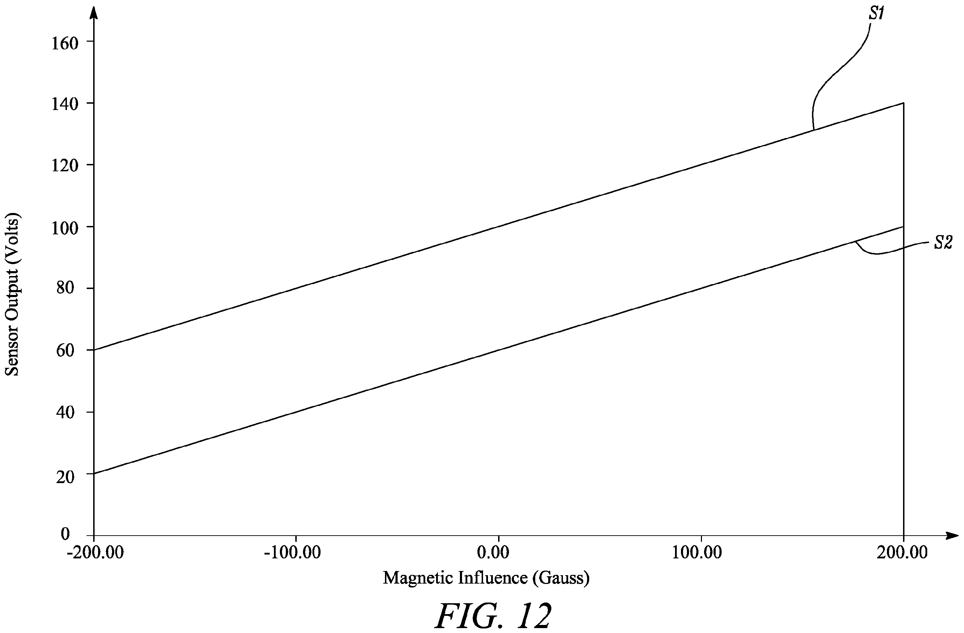

**FIG. 12** illustrates the sensitivity slopes of the first hall sensor **160** and the second hall sensor **170** in the fifth embodiment for the first case. The first hall sensor **160** defines a first slope **"S1"** and the second hall sensor **170** defines a second slope **"S2".** The first slope **"S1"** and the second slope **"S2"** give the first detected value **"V1"** (Volts) and second detected value **"V2"** (Volts) under the magnetic influence (Gauss) of the magnet **150.** In first case, the first hall sensor **160** and the second hall sensor **170** include a positive sensitivity. Further, the first hall sensor **160** and the second hall sensor **170** define same sensitivity. In some other embodiments, the first hall sensor **160** and the second hall sensor **170** may include a negative sensitivity. Further, the first slope **"S1"** and the second slope **"S2"** do not overlap as the first hall sensor **160** experiences more magnetic influence of the magnet **150** than the second hall sensor **170.**

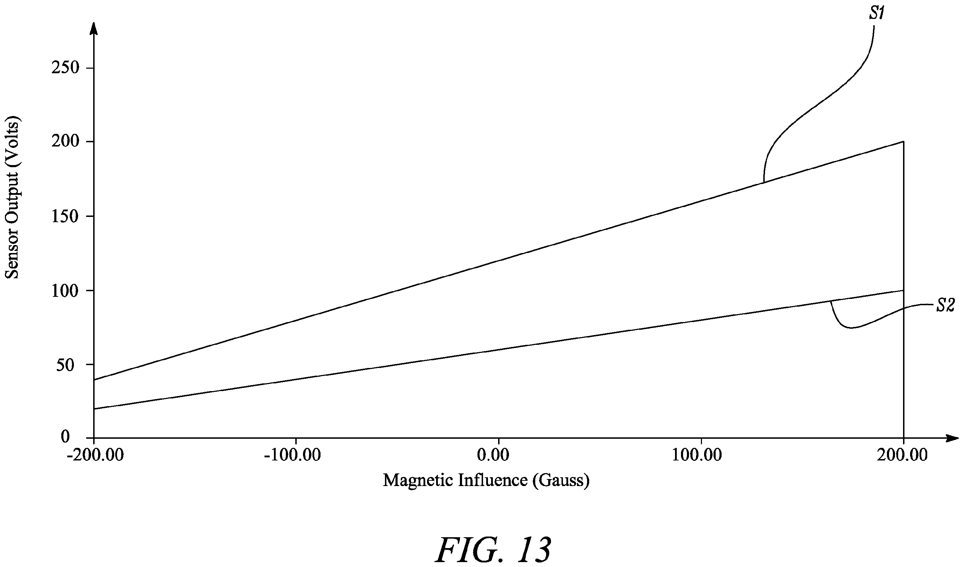

**FIG. 13** illustrates the sensitivity slopes of the first hall sensor **160** and the second hall sensor **170** in the fifth embodiment for the second case. The first hall sensor **160** defines a first slope **"S1"** and the second hall sensor **170** defines a second slope **"S2".** The first slope **"S1"** and the second slope **"S2"** give the first detected value **"V1"** (Volts) and second detected value **"V2"** (Volts) under the magnetic influence (Gauss) of the magnet **150.** In second case, the first hall sensor **160** and the second hall sensor **170** include a positive sensitivity. Further, the first hall sensor **160** and the second hall sensor **170** define different sensitivity. In some other embodiments, the first hall sensor **160** and the second hall sensor **170** may include a negative sensitivity. Further, the first slope **"S1"** and the second slope **"S2"** are non-identical and do not overlap as the first hall sensor **160** experiences more magnetic influence of the magnet **150** than the second hall sensor **170.**

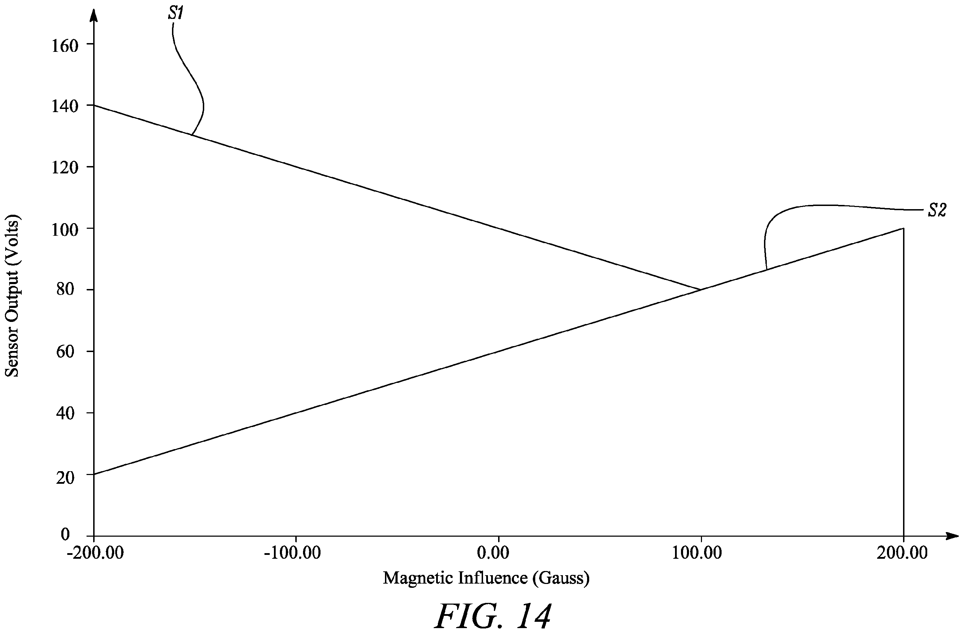

**FIG. 14** illustrates the sensitivity slopes of the first hall sensor **160** and the second hall sensor **170** in the fifth embodiment for the third case. The first hall sensor **160** defines a first slope **"S1"** and the second hall sensor **170** defines a second slope **"S2".** The first slope **"S1"** and the second slope **"S2"** give the first detected value **"V1"** (Volts) and second detected value **"V2"** (Volts) under the magnetic influence (Gauss) of the magnet **150.** In third case, the first hall sensor **160** includes a negative sensitivity and the second hall sensor **170** include a positive sensitivity. In some other embodiments, the first hall sensor **160** may include a positive sensitivity and the second hall sensor **170** may include a negative sensitivity. Further, first slope **"S1"** and the second slope **"S2"** are non-identical and do not overlap as the first hall sensor **160** experiences more magnetic influence of the magnet **150** than the second hall sensor **170.** Furthermore, the first slope **"S1"** is inverse as compare to the second slope **"S2".**

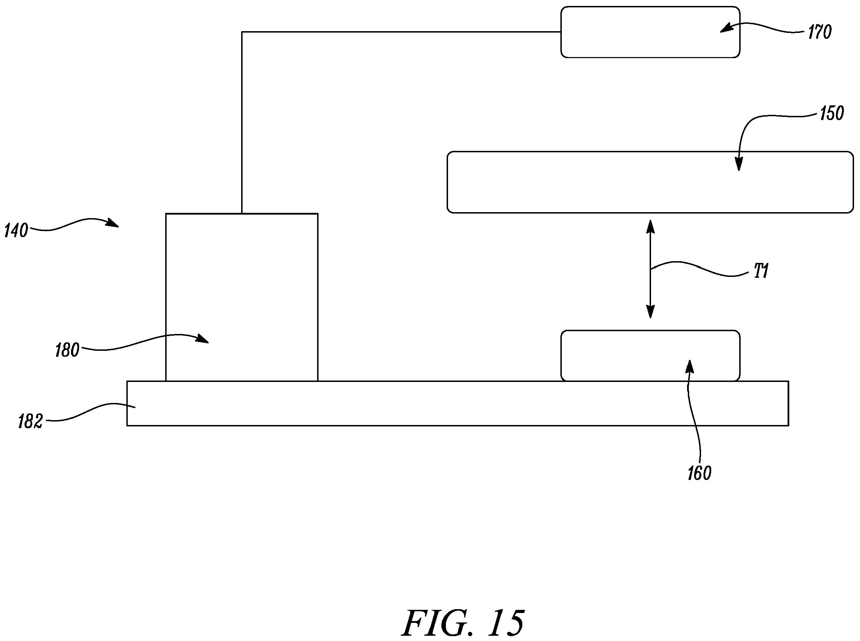

**FIG. 15** illustrates a sixth embodiment of the sensor **140.** In this embodiment, the arrangement includes the first hall sensor **160,** and the second hall sensor **170** are arranged around opposite sides of the magnet **150.** In a first case, the first hall sensor **160** defines a negative sensitivity, and the second hall sensor **170** defines a positive sensitivity. In some other embodiments, the first hall sensor **160** may define a positive sensitivity, and the second hall sensor **170** may define a negative sensitivity. In a second case, the first hall sensor **160,** and the second hall sensor **170** define positive or negative sensitivities. Further, the control unit **180** compares the first detected value **"V1"** and the second detected value **"V2"** from the first hall sensor **160** and the second hall sensor **170** in this arrangement and decides on the safe mode when one of the first detected value **"V1",** and the second detected value **"V2"** is within a pre-defined range of the other.

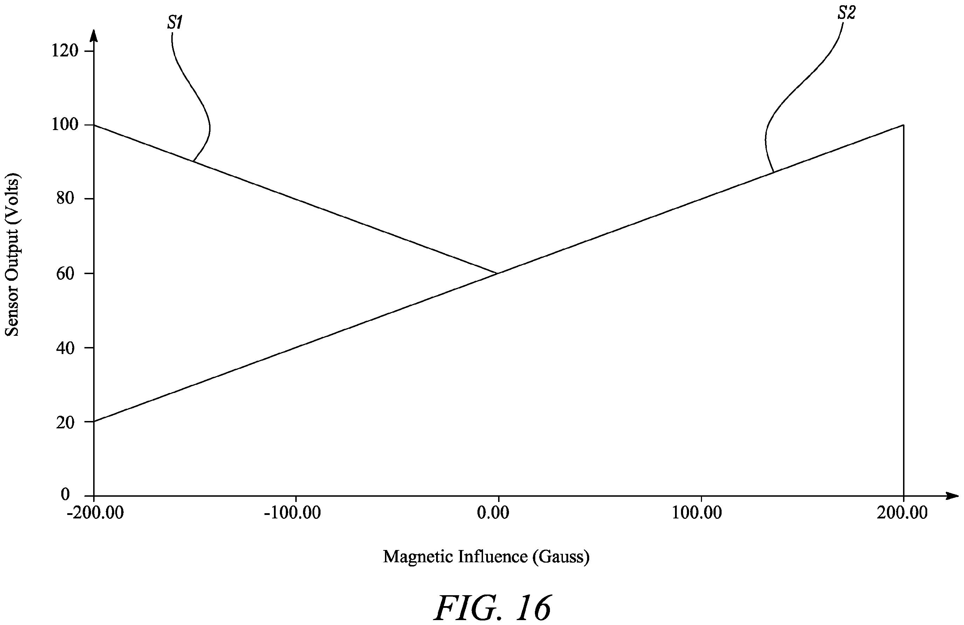

**FIG. 16** illustrates the sensitivity slopes of the first hall sensor **160** and the second hall sensor **170** in the sixth embodiment for the first case. The first hall sensor **160** defines a first slope **"S1"** and the second hall sensor **170** defines a second slope **"S2".** The first slope **"S1"** and the second slope **"S2"** give the first detected value **"V1"** (Volts) and second detected value **"V2"** (Volts) under the magnetic influence (Gauss) of the magnet **150.** In first case, the first hall sensor **160** includes a negative sensitivity and the second hall sensor **170** includes a positive sensitivity. Further, first slope **"S1"** and the second slope **"S2"** do not overlap as the first hall sensor **160** has the negative sensitivity and the second hall sensor **170** has the positive sensitivity. Furthermore, the first slope **"S1"** is inverse as compare to the second slope **"S2".**

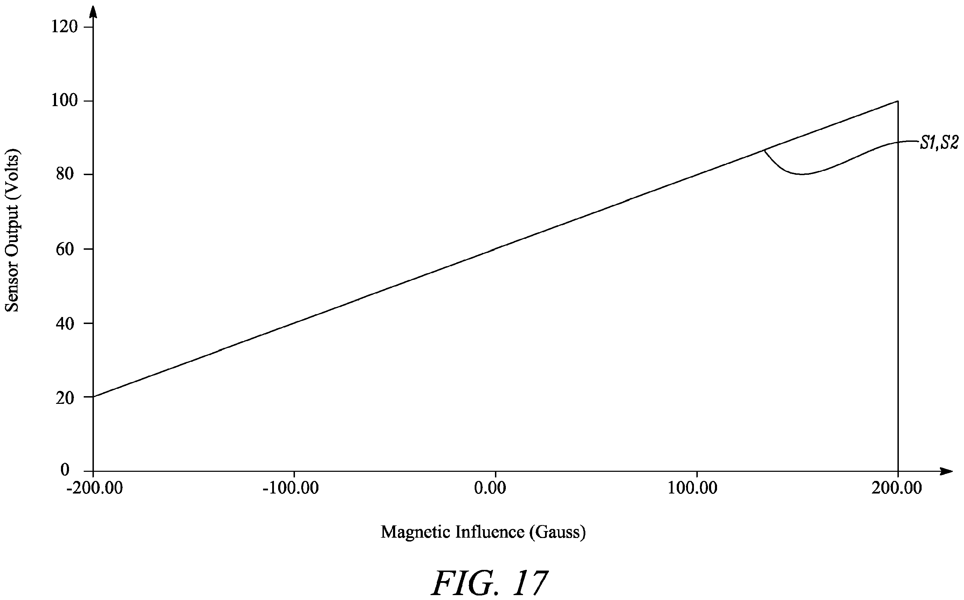

**FIG. 17** illustrates the sensitivity slopes of the first hall sensor **160** and the second hall sensor **170** in the sixth embodiment for the second case. The first hall sensor **160** defines a first slope **"S1"** and the second hall sensor **170** defines a second slope **"S2".** The first slope **"S1"** and the second slope **"S2"** give the first detected value **"V1"** (Volts) and second detected value **"V2"** (Volts) under the magnetic influence (Gauss) of the magnet **150.** In the second case, the first hall sensor **160** and the second hall sensor **170** include a positive sensitivity. In other embodiment, the first hall sensor **160** and the second hall sensor **170** may include a negative sensitivity. Further, first slope **"S1"** and the second slope **"S2"** are identical and overlap as the first hall sensor **160** and the second hall sensor **170** include the positive sensitivity.

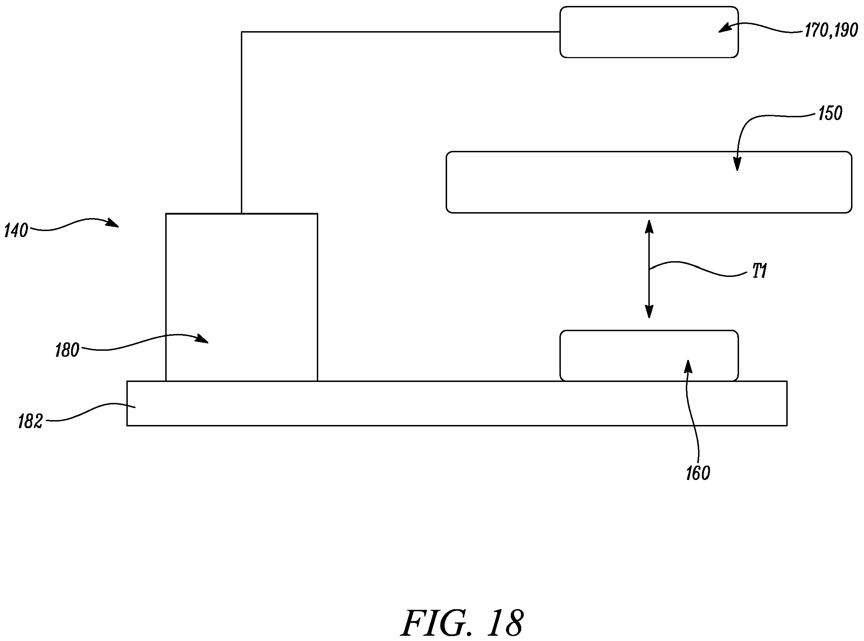

**FIG. 18** illustrates a seventh embodiment of the sensor **140.** In this embodiment, the arrangement includes one of the first hall sensor **160,** and the second hall sensor **170** is a switch **190,** and other delivers the one or more detected values **"V1", "V2"** to the control unit **180.** In the illustrated embodiment, the second hall sensor **170** is the switch **190.** In some embodiments, the first hall sensor may work as the switch **190.** In the first case the first hall sensor **160,** and the second hall sensor **170** define the positive sensitivities or the negative sensitivities. The sensitivity slopes for the first case is similar to the sensitivity slopes shown in **FIG. 16****.** In second case the first hall sensor **160** defines a negative sensitivity, and the second hall sensor **170** defines a positive sensitivity. The sensitivity slopes for the second case is similar to the sensitivity slopes shown in **FIG. 17****.** In some other embodiments, the first hall sensor **160** may define the positive sensitivity, and the second hall sensor **170** may define the negative sensitivity. Further, the control unit **180** detects the one or more detected value in this arrangement and decides on the safe mode to actuate the switch **190.** The detected values **"V1", "V2"** are typically less (in micro volt) therefore the hall sensor **140** may use a Schmitt Trigger (not shown) along with an amplifier (not shown) to work as the switch **190.** Further, the switch **190** is one or more of a bipolar, an omnipolar, and a latch.

The present disclosure provides an improved design of the cutting tool **100** with a pedelec system to assist a cutting action. The hall sensors **160, 170** arrangement of the cutting tool **100** prevents any accidental and unintended start of the cutting tool **100** in presence of the external magnetic influence. The output of the one hall sensor (say the first hall sensor **160**) is used for control purpose while the output of the other hall sensor (say the second hall sensor **170**) is used for validation and enabling of the control system. Further, the different arrangements of the sensor **140** prevent manipulation in detected values **"V1", "V2"** by the hall sensors **160, 170** i.e., the first hall sensor **160,** and the second hall sensor **170** in the external magnetic influence when the external magnet is placed intended or unintended proximate the sensor **140.** The first detected value **"V1"** and the second detected value **"V2"** are accurate and are influence by the external magnetic influence to signify presence of the external magnet. Moreover, a simple and cost-effective design of the cutting tool **100** allows the user to perform cutting operations without any safety hazards.

In the drawings and specification, there have been disclosed preferred embodiments and examples of the disclosure and, although specific terms are employed, they are used in a generic and descriptive sense only and not for the purpose of limitation of the scope of the disclosure being set forth in the following claims.

### LIST OF ELEMENTS

- **100**: Cutting Tool
- **102**: First Cutting Blade
- **104**: Second Cutting Blade
- **106**: Cutting Edge
- **108**: Anvil Support
- **110**: Pivot Point
- **112**: First Handle
- **114**: Second Handle
- **116**: Motor
- **118**: Drive Unit
- **120**: Gear
- **122**: Winding Element
- **124**: Bearing
- **126**: Battery
- **128**: Handle Pivot Point
- **130**: Actuator
- **132**: Spring
- **134**: Housing
- **140**: Sensor
- **150**: Magnet
- **160**: First Hall Sensor
- **170**: Second Hall Sensor
- **180**: Control Unit
- **182**: PCBA (Printed Circuit Board Assembly)
- **190**: Switch
- **VI**: First Detected Value
- **V2**: Second Detected Value
- **T1**: Travel Path of Magnet
- **S1**: Sensitivity Slope of First Hall Sensor
- **S2**: Sensitivity Slope of Second Hall Sensor

## Claims

1. A cutting tool **(100),** comprising:
one or more cutting blades **(102), (104)** adapted to perform a cutting action based on a hand force on the cutting tool **(100);**
a motor **(116)** operatively coupled with the one or more cutting blades **(102), (104),** wherein the motor **(116)** is adapted to allow the cutting action by the one or more cutting blades **(102), (104);**
at least one sensor **(140)** measuring the hand force, wherein the at least one sensor **(140)** includes a magnet **(150)** having a magnetic influence on at least one hall sensor **(160), (170),** wherein the hand force will move the magnet **(150)** to produce one or more detected values **("VI"), ("V2")** from the at least one hall sensor **(160), (170);** and
a control unit **(180)** configured with the at least one hall sensor **(160), (170)** and the motor **(116),** wherein the control unit **(180)** receives at least one representation of the one or more detected values **("VI"), ("V2")** from the at least one hall sensor **(160), (170),** and drives the motor **(116);**
**characterized in that:**
the at least one sensor **(140)** that measures the hand force is an arrangement of at least two hall sensors **(160), (170),** wherein the at least two hall sensors **(160), (170)** includes a first hall sensor **(160)** configured to detect a first detected value **("VI"),** and a second hall sensor **(170)** configured to detect a second detected value **("V2"),**
wherein the at least one representation is derived from the first detected value **("V1")** and the second detected value **("V2"),** and wherein the control unit **(180)** based on the least one representation decides on a safe mode that allows starting of the motor **(116).**

2. The cutting tool **(100)** of claim 1, wherein the first and/or the second hall sensor **(160), (170)** is a digital sensor, wherein a signal derived from the first, second detected value **("VI"), ("V2")** of the first and/or the second hall sensor **(160), (170)** is a digital value or comprises a communication protocol.

3. The cutting tool **(100)** of claim 1 or 2, wherein the control unit **(180)** receives two representations, wherein one is derived from the first detected value **("V1")** and other derived from the second detected value **("V2"),** wherein the two representations are compared with each other.

4. The cutting tool **(100)** of claim 1, wherein the arrangement comprising:
the first hall sensor **(160),** and the second hall sensor **(170)** mounted on one side of a PCBA **(182),** and substantially laterally aligned with the magnet **(150),**
wherein the control unit **(180)** compares the first detected value **("V1")** and the second detected value **("V2")** from the first hall sensor **(160)** and the second hall sensor **(170)** in this arrangement and decides on the safe mode when the first detected value **("V1")** is similar in magnitude to the second detected value **("V2").**

5. The cutting tool **(100)** of claim 2, wherein the arrangement comprising:
the first hall sensor **(160),** and the second hall sensor **(170)** mounted on opposite sides of the PCBA **(182),**
wherein both the sensors **(160), (170)** have a positive or a negative sensitivity-based output value, and
wherein the control unit **(180)** compares the first detected value **("V1")** and the second detected value **("V2")** from the first hall sensor **(160)** and the second hall sensor **(170)** in this arrangement and decides on the safe mode when one of the first detected value **("VI"),** and the second detected value **("V2")** is within a pre-defined range of the magnetic influence of the magnet **(150).**

6. The cutting tool **(100)** of claim 2, wherein the arrangement comprising:
the first hall sensor **(160),** and the second hall sensor **(170)** mounted on opposite sides of the PCBA **(182),**
wherein both the sensors **(160), (170)** have a different sensitivity-based output value, and
wherein the control unit **(180)** compares the first detected value **("V1")** and the second detected value **("V2")** from the first hall sensor **(160)** and the second hall sensor **(170)** in this arrangement and decides on the safe mode when one of the first detected value **("VI"),** and the second detected value **("V2")** is within a pre-defined range of the magnetic influence of the magnet **(150).**

7. The cutting tool **(100)** of claim 1, wherein the arrangement comprising:
the first hall sensor **(160),** and the second hall sensor **(170)** arranged in a staggered manner with respect to the magnet **(150),**
wherein the control unit **(180)** compares the first detected value **("V1")** and the second detected value **("V2")** from the first hall sensor **(160)** and the second hall sensor **(170)** in this arrangement and decides on the safe mode when imbalance between the first detected value **("VI"),** and the second detected value **("V2")** is within a pre-defined range of the magnetic influence of the magnet **(150).**

8. The cutting tool **(100)** of claim 5, wherein the first hall sensor **(160)** is substantially laterally/directly aligned to a central axis of the magnet **(150),** and the second hall sensor **(170)** is not in direct alignment of the central axis of the magnet **(150).**

9. The cutting tool **(100)** of claim 1, wherein the arrangement comprising:
the first hall sensor **(160),** and the second hall sensor **(170)** are arranged around opposite sides of the magnet **(150),**
wherein the control unit **(180)** compares the first detected value **("V1")** and the second detected value **("V2")** from the first hall sensor **(160)** and the second hall sensor **(170)** in this arrangement and decides on the safe mode when one of the first detected value **("VI"),** and the second detected value **("V2")** is within a pre-defined range of the other.

10. The cutting tool **(100)** of claim 7, wherein the first hall sensor **(160),** and the second hall sensor **(170)** are arranged above and below the magnet **(150).**

11. The cutting tool **(100)** of any of the preceding claims, wherein the first hall sensor **(160),** and the second hall sensor **(170)** have different slope rates **("S1"), ("S2").**

12. The cutting tool **(100)** of claim 5, wherein the first hall sensor **(160),** and the second hall sensor **(170)** have different slopes **("S1"), ("S2").**

13. The cutting tool **(100)** of claim 5, wherein the first hall sensor **(160)** has a positive slope **("S1"),** and the second hall sensor **(170)** has a negative slope **("S2").**

14. The cutting tool **(100)** of claim 1, wherein the arrangement comprising:
one of the first hall sensor **(160),** and the second hall sensor **(170)** is a switch **(190),** and other delivers the one or more detected values **("VI"), ("V2")** to the control unit **(180),**
wherein the control unit **(180)** detects the one or more detected value in this arrangement and decides on the safe mode to actuate the switch **(190).**

15. The cutting tool **(100)** of claim 12, wherein the switch **(190)** is one or more of a bipolar, an omnipolar, and a latch.

16. The cutting tool **(100)** of any of the preceding claims, wherein the cutting tool **(100)** is selected from the group of one or more of a secateur, a shear, and a lopper.

## Amended claims

### Amended claims in accordance with Rule 137(2) EPC.

1. A cutting tool **(100),** comprising:
one or more cutting blades **(102), (104)** adapted to perform a cutting action based on a hand force on the cutting tool **(100);**
a motor **(116)** operatively coupled with the one or more cutting blades **(102), (104),** wherein the motor **(116)** is adapted to allow the cutting action by the one or more cutting blades **(102), (104);**
at least one sensor **(140)** measuring the hand force, wherein the at least one sensor **(140)** includes a magnet **(150)** having a magnetic influence on at least one hall sensor **(160), (170),** wherein the hand force will move the magnet **(150)** to produce one or more detected values **("V1"), ("V2")** from the at least one hall sensor **(160), (170);** and
a control unit **(180)** configured with the at least one hall sensor **(160), (170)** and the motor **(116),** wherein the control unit **(180)** receives at least one representation of the one or more detected values **("V1"), ("V2")** from the at least one hall sensor **(160), (170),** and drives the motor **(116);**
wherein the at least one sensor **(140)** that measures the hand force is an arrangement of at least two hall sensors **(160), (170),** wherein the at least two hall sensors **(160), (170)** includes a first hall sensor **(160)** configured to detect a first detected value **("V1"),** and a second hall sensor (170) configured to detect a second detected value **("V2"),**
wherein the control unit **(180)** receives two representations, wherein one is derived from the first detected value **("V1")** and other derived from the second detected value **("V2"),**
**characterized in that:**
the two representations are compared with each other, and wherein the control unit **(180)** based on the comparison of the two representations decides on a safe mode that allows starting of the motor **(116).**

2. The cutting tool **(100)** of claim 1, wherein the first and/or the second hall sensor **(160), (170)** is a digital sensor, wherein a signal derived from the first, second detected value **("V1"), ("V2")** of the first and/or the second hall sensor **(160), (170)** is a digital value or comprises a communication protocol.

3. The cutting tool **(100)** of claim 1, wherein the arrangement comprising:
the first hall sensor **(160),** and the second hall sensor **(170)** mounted on one side of a PCBA **(182),** and substantially laterally aligned with the magnet **(150),**
wherein the control unit **(180)** compares the first detected value **("V1")** and the second detected value **("V2")** from the first hall sensor **(160)** and the second hall sensor **(170)** in this arrangement and decides on the safe mode when the first detected value **("V1")** is similar in magnitude to the second detected value **("V2").**

4. The cutting tool **(100)** of claim 3, wherein the arrangement comprising:
the first hall sensor **(160),** and the second hall sensor **(170)** mounted on opposite sides of the PCBA **(182),**
wherein both the sensors **(160), (170)** have a positive or a negative sensitivity-based output value, and
wherein the control unit **(180)** compares the first detected value **("V1")** and the second detected value **("V2")** from the first hall sensor **(160)** and the second hall sensor **(170)** in this arrangement and decides on the safe mode when one of the first detected value **("V1"),** and the second detected value **("V2")** is within a pre-defined range of the magnetic influence of the magnet **(150).**

5. The cutting tool **(100)** of claim 3, wherein the arrangement comprising:
the first hall sensor **(160),** and the second hall sensor **(170)** mounted on opposite sides of the PCBA **(182),**
wherein both the sensors **(160), (170)** have a different sensitivity-based output value, and
wherein the control unit **(180)** compares the first detected value **("V1")** and the second detected value **("V2")** from the first hall sensor **(160)** and the second hall sensor **(170)** in this arrangement and decides on the safe mode when one of the first detected value **("V1"),** and the second detected value **("V2")** is within a pre-defined range of the magnetic influence of the magnet **(150).**

6. The cutting tool **(100)** of claim 1, wherein the arrangement comprising:
the first hall sensor **(160),** and the second hall sensor **(170)** arranged in a staggered manner with respect to the magnet **(150),**
wherein the control unit **(180)** compares the first detected value **("V1")** and the second detected value **("V2")** from the first hall sensor **(160)** and the second hall sensor **(170)** in this arrangement and decides on the safe mode when imbalance between the first detected value **("V1"),** and the second detected value **("V2")** is within a pre-defined range of the magnetic influence of the magnet **(150).**

7. The cutting tool **(100)** of claim 4, wherein the first hall sensor **(160)** is substantially laterally/directly aligned to a central axis of the magnet **(150),** and the second hall sensor **(170)** is not in direct alignment of the central axis of the magnet **(150).**

8. The cutting tool **(100)** of claim 1, wherein the arrangement comprising:
the first hall sensor **(160),** and the second hall sensor **(170)** are arranged around opposite sides of the magnet **(150),**
wherein the control unit **(180)** compares the first detected value **("V1")** and the second detected value **("V2")** from the first hall sensor **(160)** and the second hall sensor **(170)** in this arrangement and decides on the safe mode when one of the first detected value **("V1"),** and the second detected value **("V2")** is within a pre-defined range of the other.

9. The cutting tool **(100)** of claim 6, wherein the first hall sensor **(160),** and the second hall sensor **(170)** are arranged above and below the magnet **(150).**

10. The cutting tool **(100)** of any of the preceding claims, wherein the first hall sensor **(160),** and the second hall sensor **(170)** have different slope rates **("S1"), ("S2").**

11. The cutting tool **(100)** of claim 4, wherein the first hall sensor (160), and the second hall sensor **(170)** have different slopes **("S1"), ("S2").**

12. The cutting tool **(100)** of claim 4, wherein the first hall sensor **(160)** has a positive slope **("S1"),** and the second hall sensor **(170)** has a negative slope **("S2").**

13. The cutting tool **(100)** of any of the preceding claims, wherein the cutting tool **(100)** is selected from the group of one or more of a secateur, a shear, and a lopper.
